# EUROPÄISCHE PATENTSCHRIFT

(11) **EP 1 440 261 B1**
(45) Veröffentlichungstag und Bekanntmachung des Hinweises auf die Patenterteilung: **20.04.2005**
(21) Anmeldenummer: 02774719.5
(22) Anmeldetag: 16.10.2002
(51) Int. Cl.: F16J 15/18

(54) **VORRICHTUNG ZUM BEHANDELN EINES STOFFES**
DEVICE FOR TREATING A MATERIAL
DISPOSITIF POUR LE TRAITEMENT D'UNE MATIERE

(30) Priorität: 31.10.2001 DE 10153293
(43) Veröffentlichungstag der Anmeldung: 28.07.2004
(73) Patentinhaber: LIST AG, 4422 Arisdorf (CH)
(72) Erfinder: LIST, Jörg M., CH-1568 Portalban (CH); KUNZ, Alfred, CH-4108 Witterswil (CH)
(74) Vertreter: Weiss, Peter, Dr. rer. nat.
(86) Internationale Anmeldenummer: PCT/EP2002/011579
(87) Internationale Veröffentlichungsnummer: WO 2003/038319

(56) Entgegenhaltungen:
- FR-A- 2 347 588
- GB-A- 2 026 628
- US-A- 1 649 472
- US-A- 3 282 592
- US-A- 4 199 155
- US-A- 4 412 747
- US-A- 5 090 711

## Beschreibung

Die Erfindung betrifft eine Vorrichtung zum Behandeln eines Stoffes in einem Raum eines Gehäuses mittels Arbeitselementen, die an einer Welle angeordnet sind, welche von einer Stopfbüchse umfangen ist, die zumindest ein Dichtungsgehäuse aufweist, welches auf zumindest ein Dichtungspaket drückt, wobei das Dichtungselement achsparallel zur Welle mit einem regelbaren Druck gegen das Dichtungspaket hin beaufschlagbar und mit dem Dichtungsgehäuse ein regelbarer Kraftspeicher zum Beaufschlagen des Dichtungselementes mit einem regelbaren Druck achsparallel zur Welle gegen das Dichtungspaket hin verbunden ist.

In sehr vielen technischen Bereichen wird eine Welle insgesamt oder über einen Wellenzapfen in einem Lager gehalten, in dem die Welle dreht. Meist handelt es sich dabei auch um Wellendurchführungen durch ein Dichtgehäuse, bei denen vermieden werden soll, dass ein Stoff aus beispielsweise einem Raum, in dem die Welle dreht, über die Dichtung nach aussen gelangt.

Derartige schwimmende Abdichtungen sind vielfältigen Kräften ausgesetzt, welche die Dichtelemente beanspruchen und verschleissen. Im Falle des Verschleisses müssen die entsprechenden Dichtelement leicht zu ersetzen sein.

Als Kräfte, die auf eine solche schwimmende Abdichtung wirken, sind vor allem radiale, torsions- und axial wirkende Kräfte zu erwähnen.

Die vorliegende Erfindung bezieht sich vor allem, jedoch keineswegs ausschliesslich, auf sogenannte Mischkneter zum mechanischen und/oder thermischen Behandeln von Produkten in flüssigem, pastösem oder pulverförmigem Zustand mit oder ohne Zu- bzw. Abführung von Gasen und/oder Dämpfen mit einem Gehäuse und einer in dem Gehäuse um eine Drehachse drehenden Welle, an der in axialer Richtung verteilt Knetelemente vorgesehen sind. Beispielsweise ist ein derartiger Mischkneter in der EP 0 422 454 D1 beschrieben. Die Welle mit den Knetelementen lagert über Wellenzapfen in sogenannten Wälzlagern, bei denen zwischen der Welle, dem dynamischen Teil, und dem Gehäuse, dem statischen Teil, in einem Dichtgehäuse zumindest eine Packung aus Dichtmaterial eingesetzt und zusammengepresst ist, wodurch sich die Dichtungspackung dicht an die Gleitfläche anschmiegt.

Derartige Dichtgehäuse müssen flexibel gelagert sein, um Wellenbewegungen aufzufangen. Dies geschieht bisher über entsprechende Balgverbindungen zwischen dem Dichtgehäuse und dem statischen Teil, jedoch sind diese Balgverbindungen ebenfalls einem erheblichen Verschleiss ausgesetzt und brechen wegen Ermüdung im Laufe der Zeit auseinander.

Um den Stopfbüchseffekt zu erzielen muss über das Dichtungsgehäuse ein Druck auf die Dichtungspackung ausgeübt werden. Dies geschieht heute entweder über Zugschrauben oder aber beispielsweise über Tellerfedern. Erstere werden je nach dem Know-How des Betreibers der Vorrichtung nachgestellt, sofern dies notwendig erscheint. Sie reagieren aber keineswegs auf Wärmeausdehnung oder Volumenverkleinerung bei Abkühlung. Dementsprechend ist der Druck, der auf die Dichtungspackung ausgeübt wird, immer unterschiedlich, so dass es nicht nur zu einem erhöhten Verschleiss, sondern auch zu erheblichen Leckagen kommt.

Bei den Tellerfedern ist die Kraftvorgabe völlig gleich, so dass auch sie keinen unterschiedlichen Anforderungen infolge von Wärmeausdehnung bzw. Volumenverminderung bei Abkühlung Rechnung tragen können.

Vorrichtungen, bei denen über einen Kraftspeicher Druck auf ein Dichtungspaket ausgeübt wird, sind beispielsweise aus der GB 2 026 628, FR 2 347 588, US 1 649 472 und US 5 090 711 bekannt.

Aus der US 4 412 747 und insbesondere der US 3 282 592 ist bekannt, dass ein Hebelarm über einen Kraftspeicher, der pneumatisch angetrieben sein kann, mit Druck beaufschlagt wird, wobei dieser Hebelarm den Druck an das Dichtungspaket weitergibt.

Der vorliegenden Erfindung liegt die Aufgabe zugrunde, eine Vorrichtung der o.g. Art zu schaffen, bei der die Abdichtung der Stopfbüchse wesentlich verbessert ist. Zur Lösung dieser Aufgabe führt, dass der Kraftspeicher über einem Seilzug mit dem Dichtungsgehäuse verbunden ist, wobei der Seilzug flaschenzugartig über eine oder mehrere Umlenkrollen geführt ist und eine Umlenkrolle so angeordnet ist, dass der Zug achsparallel zur Achse der Welle erfolgt.

Das bedeutet, dass durch den regelbaren Druck unterschiedlichen Anforderungen Rechnung getragen werden kann. Bevorzugt wird, dass die Dichtungspackung exakt mit dem gleichen Druck beaufschlagt wird, egal, ob sich ihr Volumen durch Wärmeausdehnung vergrössert oder durch Abkühlung verkleinert. Das bedeutet, dass ein pneumatischer Kraftspeicher vorgesehen sein sollte, welcher bei Wärmeausdehnung, beispielsweise eine Druckerhöhung verhindert, indem die Ausdehnungen kompensiert werden. Das gleiche gilt, wenn sich das Volumen der Packung bei Abkühlung verkleinert, wobei auch hier der Druck im Kraftspeicher konstant bleibt.

Bevorzugt handelt es sich bei dem Kraftspeicher um einen pneumatisch angetriebenen Zylinder, allerdings ist auch ein hydraulischer Zylinder oder sogar ein elektromotorischer Kraftspeicher denkbar. Bevorzugt wird jedoch ein pneumatisch angetriebener Zylinder.

Da doch ein erheblicher Druck auf das Dichtungsgehäuse ausgeübt werden muss, wird der Seilzug flaschenzugartig über eine oder mehrere Umlenkrollen zu führen. Hierdurch wird die an den Zylinder zu stellende Kraftanforderung vermindert.

Damit das Dichtungsgehäuse bei achsparalleler Druckbeaufschlagung nicht verkantet, erweist es sich als ratsam, gegenüber dem einen Seilzug ein weiteres flexibles Element entsprechender Art anzuordnen, welches entweder mit dem gleichen pneumatischen Zylinder, wie der Seilzug, oder aber mit einem eigenen pneumatischen Zylinder verbunden ist, welcher pneumatisch parallel geschaltet ist.

In einem anderen Ausführungsbeispiel der Erfindung kann ein einziger Seilzug mit seinen Enden beidseits an dem Dichtungsgehäuse angelenkt sein. Es ist dann über eine Umlenkung geführt, die dem pneumatischen Zylinder zugeordnet ist. Hier sind viele Möglichkeiten denkbar, die von der vorliegenden Erfindung umfasst sein sollen.

Durch die vorliegende Erfindung wird die Standzeit einer Stopfbüchse wesentlich verbessert. Hervorzuheben ist, dass kein Überpressen, wie beispielsweise beim mechanischen Nachziehen von Zugschrauben, stattfindet. Auf die Dichtungspackung wird immer exakt der gleiche Druck aufgebracht.

Hervorzuheben ist ferner, dass die gesamte Zug- bzw. Druckeinrichtung fern von der eigentlichen Stopfbüchse angeordnet sein kann, so dass sie von den erhöhten Temperaturen in diesem Bereich nicht tangiert ist. Sie ist korrosionsunempfindlicher und wartungsfreundlicher.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine teilweise geschnitten dargestellte Seitenansicht eines Teils einer erfindungsgemässen Vorrichtung zum Behandeln eines Stoffes;
Figur 2 eine vergrössert dargestellte Rückansicht eines weiteren Ausführungsbeispiels einer Vorrichtung zum Behandeln eines Stoffes.

Bei einer derartigen Vorrichtung kann es sich beispielsweise um einen sogenannten Mischkneter handeln, wie er in der EP 0 517 068 B1 beschrieben ist. Sie dienen Insbesondere zum Behandeln von zähviskos pastösen Produkten, indem ein mechanischer, chemischer und/oder thermischer Prozess mittels entsprechenden Arbeitselementen, insbesondere mittels Knet- und Transportelementen durchgeführt wird. Diese Elemente sind an einer Welle 1 angeordnet, die im vorliegenden Fall lediglich gestrichelt angedeutet ist. Diese Welle 1 dreht in einer Lagermuffe 2, an die auch das nicht näher gezeigte Gehäuse anschliesst, in welchem der Raum gebildet ist, in dem der Stoff behandelt wird.

Die Welle 1 ist gegenüber der Lagermuffe 2 durch ein Dichtungspaket einer Stopfbüchse abgedichtet. Auf dieses Dichtungspaket 3 drückt ein Dichtungsgehäuse 4 und übt den für eine Stopfbüchse notwendigen Druck aus. Hierzu ist das Dichtungsgehäuse 4 über zumindest einen Seilzug 5 mit einer Kolbenstange 6 eines pneumatisch angetriebenen Zylinders 7 verbunden. Der Seilzug 5 ist über eine Umlenkrolle 8 geführt, die nahe an dem Zylinder 7 vorgesehen ist. Eine weitere Umlenkung erfolgt über eine Umlenkrolle 9, welche drehbar an der Lagermuffe 2 vorgesehen ist.

Die Verbindung des Seilzuges 5 sowohl mit dem Dichtungsgehäuse 4 als auch mit der Kolbenstange 6 erfolgt über entsprechende Gelenke 10 bzw. 11.

Die Funktionsweise der vorliegenden Erfindung ist folgende:

Über den Zylinder 7 bzw. die Kolbenstange 6 wird ein Zug auf den Seilzug 5 ausgeübt, wobei die Umlenkrolle 9 so angeordnet ist, dass der Zug achsparallel zur Achse A der Welle 1 erfolgt. Hierdurch wird das Dichtungsgehäuse 4 auf das Dichtungspaket 3 gedrückt und damit der Stopfbüchseffekt erzielt. Über den pneumatischen Zylinder 7 wird ein exakt gleicher Druck auf das Dichtungspaket 3 ausgeübt, egal welche Wärmeausdehnungen sich ergeben. Auch wenn beim Abkühlen das Volumen der Dichtungspackung geringer wird, so kann über den pneumatischen Zylinder der Druck auf das Dichtungspaket 3 gleichgehalten werden. Entsprechende Steuerungs- und Kontrollorgane für den Zylinder 7 sind nicht näher beschrieben, da sie handelsüblich sind.

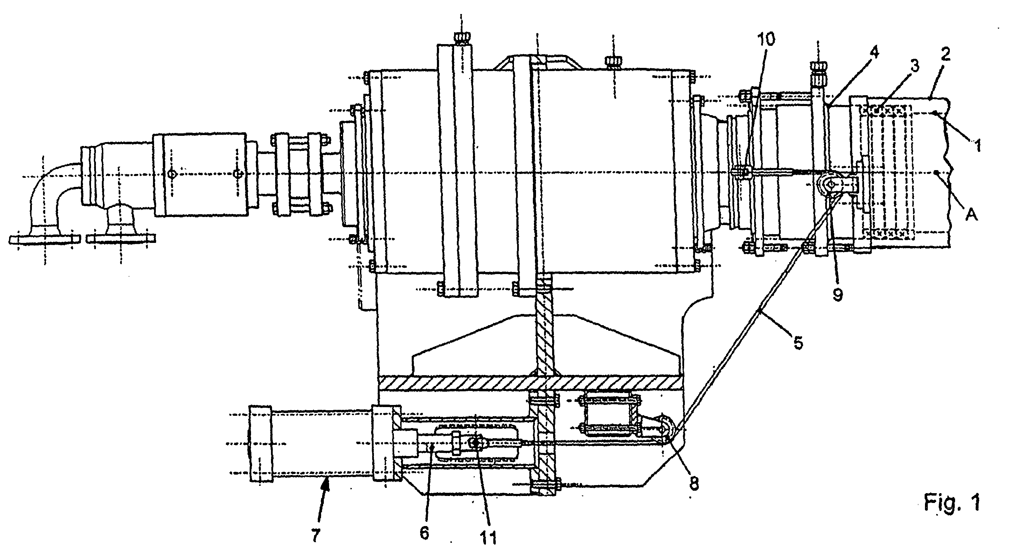

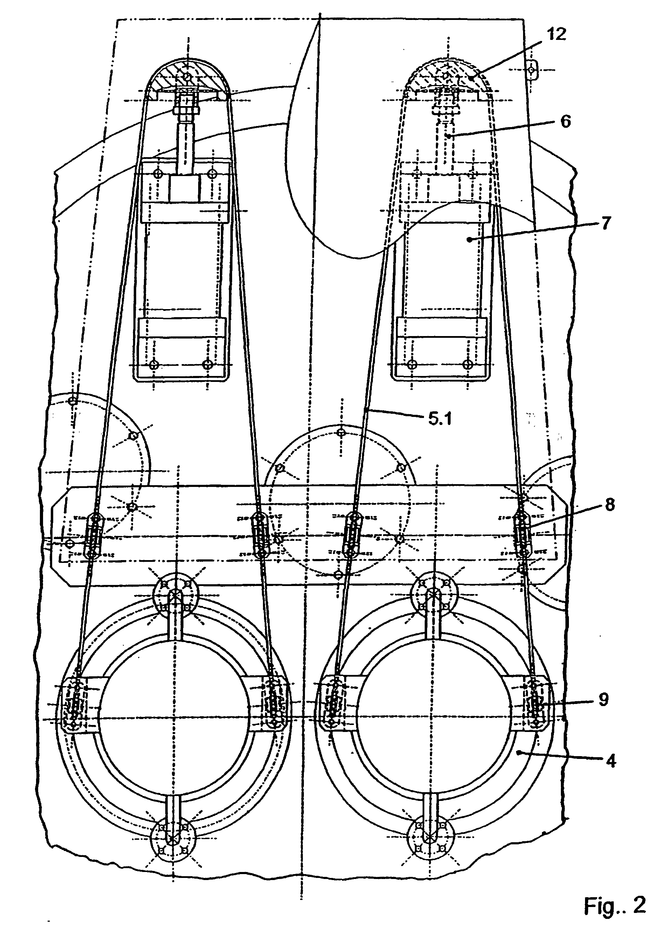

Während nach dem Ausführungsbeispiel gemäss Figur 1 entweder zwei Seilzüge mit jeweils einem Zylinder auf jeder Seite des Dichtungsgehäuses 4 vorgesehen sein können oder aber auch zwei Seilzüge, die mit nur einem Zylinder verbunden sind, ist in Figur 2 eine Anordnung gezeigt, bei der ein Seilzug 5.1 beidends jeweils auf einer Seite des Dichtungsgehäuses 4 mit diesem verbunden ist. Dieser Seilzug 5.1 ist dann über eine Umlenkung 12 gelegt, die von der Kolbenstange 6 des Zylinders 7 angegriffen wird. Auf diese Weise kann ein Ausgleich von unterschiedlichen Gegendrücken auf den Seiten erfolgen.

Im gezeigten Ausführungsbeispiel ist die Ausrichtung des Zylinders 7 anders als diejenige in Figur 1, die Wirkungsweise ist aber ähnlich. Ferner ist ein Zwei-WellenMischkneter angedeutet.

### Positionszahlenliste

| | | | | | |
|---|---|---|---|---|---|
| 1 | Welle | 34 | | 67 | |
| 2 | Lagermuff | 35 | | 68 | |
| 3 | Dichtungspaket | 36 | | 69 | |
| 4 | Dichtungsgehäuse | 37 | | 70 | |
| 5 | Seilzug | 38 | | 71 | |
| 6 | Kolbenstange | 39 | | 72 | |
| 7 | Zylinder | 40 | | 73 | |
| 8 | Umlenkrolle | 41 | | 74 | |
| 9 | Umlenkrolle | 42 | | 75 | |
| 10 | Gelenk | 43 | | 76 | |
| 11 | Gelenk | 44 | | 77 | |
| 12 | Umleitung | 45 | | 78 | |
| 13 | | 46 | | 79 | |
| 14 | | 47 | | | |
| 15 | | 48 | | | |
| 16 | | 49 | | | |
| 17 | | 50 | | A | Achse von 1 |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Vorrichtung zum Behandeln eines Stoffes in einem Raum eines Gehäuses mittels Arbeitselementen, die an einer welle (1) angeordnet sind, welche von einer Stopfbüchse (3, 4) umfangen ist, die zumindest ein Dichtungsgehäuse (4) aufweist, welches auf zumindest ein Dichtungspaket (3) drückt, wobei das Dichtungselement (4) achsparallel zur Welle (1) mit einem regelbaren Druck gegen das Dichtungspaket (3) hin beaufschlagbar und mit dem Dichtungsgehäuse (4) ein regelbarer Kraftspeicher (7) zum Beaufschlagen des Dichtungselementes (4) mit einem regelbaren Druck achsparallel zur welle (1) gegen das Dichtungspaket (3) hin verbunden ist,
**dadurch gekennzeichnet,**
**dass** der Kraftspeicher (7) über einem Seilzug (5, 5.1) mit dem Dichtungsgehäuse (4) verbunden ist, wobei der Seilzug (5, 5.1) flaschenzugartig Ober eine oder mehrere Umlenkrollen (8, 9) geführt ist und eine Umlenkrolle (9) so angeordnet ist, dass der Zug achsparallel zur Achse (A) der Welle (1) erfolgt.

2. Vorrichtung nach Anspruch 1, **dadurch gekennzeichnet, dass** sich diagonal am Dichtungsgehäuse (4) gegenüberliegend jeweils ein flexibles Element (5) vorgesehen ist.

3. Vorrichtung nach Anspruch 1 oder 2, **dadurch gekennzeichnet, dass** sich diagonal am Dichtungsgehäuse (4) gegenüberliegend das flexible Element (5.1) mit seinen Enden angelenkt ist, wobei es über eine Umlenkung (12) an dem Kraftspeicher (7) geführt ist.

## Claims

1. Apparatus for treating a substance in a chamber of a housing by means of operating elements, which are disposed on a shaft (1), which is surrounded by a gland (3, 4), which has at least one seal housing (4), which presses on at least one seal group (3), the sealing element (4) being able to be acted-upon in an axis-parallel manner relative to the shaft (1) with an adjustable pressure towards the seal group (3), and an adjustable force accumulator (7) is connected to the seal housing (4) so as to act upon the seal element (4) with an adjustable pressure in an axis-parallel manner relative to the shaft (1) towards the seal group (3), **characterised in that** the force accumulator (7) is connected to the seal housing (4) via a cable (5, 5.1), the cable (5, 5.1) being guided in a pulley-like manner over one or more guide rollers (8, 9), and one guide roller (9) being so disposed that the pulling is effected in an axis-parallel manner relative to the axis (A) of the shaft (1).

2. Apparatus according to claim 1, **characterised in that** a respective flexible element (5) is provided so as to be diagonally opposed to the seal housing (4).

3. Apparatus according to claim 1 or 2, **characterised in that**, when diagonally opposed to the seal housing (4), the flexible clement (5.1) is pivotally connected by its ends, whereby it is guided over a deflection (12) on the force accumulator (7).

## Revendications

1. Dispositif pour le traitement d'une matière dans un espace d'un boîtier au moyen d'éléments de travail qui sont disposés sur un arbre (1) entouré d'un presse-étoupe (3, 4) présentant au moins un boîtier d'étanchéité (4) appuyant sur au moins une garniture de joint (3), l'élément d'étanchéité (4) pouvant être soumis, selon un axe parallèle à l'arbre (1), à une pression réglable en direction de la garniture de joint (3) et au boîtier d'étanchéité (4) étant connecté un accumulateur de force réglable (7) destiné à soumettre l'élément d'étanchéité (4), selon un axe parallèle à l'arbre (1), à une pression réglable en direction de la garniture de joint (3),
**caractérisé par le fait**
**que** l'accumulateur de force (7) est relié, par l'intermédiaire d'un trajet de câble (5, 5.1), au boîtier d'étanchéité (4), le trajet de câble (5, 5.1) étant guidé à la manière d'un palan sur une ou plusicurs poulies de renvoi (8, 9) et qu'une poulie de renvoi (9) est disposée de sorte que la traction ait lieu de manière parallèle à l'axe (A) de l'arbre (1).

2. Dispositif selon la revendication 1, **caractérisé par le fait que** diagonalement opposé au boîtier d'étanchéité (4) est chaque fois prévu un élément flexible (5).

3. Dispositif selon la revendication 1 ou 2, **caractérisé par le fait que** diagonalement opposé au boîtier d'étanchéité (4) est connecté l'élément flexible (5.1) par ses extrémités, celui-ci étant guidé à l'accumulateur de force (7) par l'intermédiaire d'un retour (12).
